# EUROPEAN PATENT APPLICATION

(11) **EP 3 249 906 A1**
(43) Date of publication of application: **29.11.2017**
(21) Application number: 15878828.1
(22) Date of filing: 25.03.2015
(51) Int. Cl.: H04N 5/235, G06T 5/00, G09G 3/20, G09G 5/00, H04N 5/225

(54) **IMAGE-CAPTURING DEVICE, IMAGE-CAPTURING METHOD, AND IMAGE DISPLAY DEVICE**

(30) Priority: 21.01.2015 JP 2015009863
(71) Applicant: OLYMPUS CORPORATION, Hachioji-shi Tokyo 192-8507 (JP)
(72) Inventor: TOYODA Tetsuya, Hachioji-shi Tokyo 192-8507 (JP)
(74) Representative: Gunzelmann, Rainer
(86) International application number: PCT/JP2015/059038
(87) International publication number: WO 2016/117137

(57) **Abstract**

To provide a display image with a dazzling feeling and express high presence by performing sufficient gradation expression from "highlight" to "highest light". An imaging method in an imaging device including displaying means capable of enhancing display-luminance of image data more than a predetermined reference luminance, the method comprising: an imaging step (S1) of imaging a subject under a predetermined imaging condition and outputting imaging data; an image processing step (S3) of generating the image data to be displayed on the displaying means from the imaging data; and controlling steps (S7 to S25) of controlling the imaging condition in the imaging step and an enhancement amount of display-luminance in the displaying means, wherein the controlling step controls the imaging step so as to perform imaging with gradation on a high-luminance side expanded relative to a gradation characteristic serving as a reference (S13), and controls an enhancement amount of display-luminance of the displaying means, based on the expansion amount of gradation on a high-luminance side in the imaging step, in displaying the image data on the displaying means (S15).

## Description

### Field of the Invention

The present invention relates to an imaging device, an imaging method, and an image display device capable of reproducing, with high presence, a high-luminance portion of a subject.

### Description of Related Art

In observing a live-view with a display section, a live-view image is expressed from "shadow" to "highlight" within the luminance range of a display panel. Therefore, luminance exceeding "highlight" (this luminance is called "highest light") cannot be displayed and such a dazzling feeling as seen with the naked eye cannot be expressed. Moreover, the gradation from "highlight" to "highest light" can be expressed by combining the images captured with the exposure time varied, and expanding the dynamic range.

However, this method is limited only to the expression within the luminance range of a display panel. Patent Literature 1 discloses that a glossy portion of an image is detected and the emission intensity of a backlight of the glossy portion is increased based on this detection result, thereby improving the luminance of the glossy portion.

### Citation List

### Patent Literature

Patent Literature 1: Japanese Laid-Open Patent Publication No. 2009-63694

### SUMMARY OF THE INVENTION

### TECHNICAL PROBLEM

The dazzling feeling of a glossy portion (=highest light) seems to be improved with the technique disclosed in the above-mentioned Patent Literature 1. However, "highlight" also becomes brighter at the same time and the gradation expression from "highlight" to "highest light" is insufficient.

The present invention has been made in view of the above circumstances, and aims to provide an imaging device, an imaging method, and an image display device capable of providing a display image with a dazzling feeling and expressing high presence by performing sufficient gradation expression from "highlight" to "highest light".

### SOLUTION TO PROBLEM

An imaging device according to a first aspect of the present invention includes: imaging means for imaging a subject under a predetermined imaging condition and outputting imaging data; displaying means capable of enhancing display-luminance of image data more than a predetermined reference luminance; image processing means for generating the image data to be displayed on the displaying means from the imaging data; and controlling means for controlling the imaging condition in the imaging means and an enhancement amount of display-luminance in the displaying means, wherein the controlling means controls the imaging means so as to image the subject with gradation on a high-luminance side expanded relative to a previously prepared gradation characteristic serving as a reference, and controls, in displaying the image data generated by the image processing means on the displaying means, the enhancement amount of display-luminance of the displaying means based on an expansion amount of gradation on the high-luminance side of the imaging means.

An image display device according to a second aspect of the present invention is an image display device which displays an image based on an image file including image data generated by imaging a subject under a predetermined imaging condition and display-luminance expansion information, the image display device including: displaying means capable of enhancing display-luminance more than a predetermined reference luminance; and controlling means for changing the display-luminance in the displaying means in performing high-luminance expansion based on the display-luminance expansion information.

An imaging method according to a third aspect of the present invention includes: in an imaging device including displaying means capable of enhancing display-luminance of image data more than a predetermined reference luminance, an imaging step of imaging a subject under a predetermined imaging condition and outputting imaging data; an image processing step of generating the image data to be displayed on the displaying means from the imaging data; and a controlling step of controlling the imaging condition in the imaging step and an enhancement amount of display-luminance in the displaying means, wherein the controlling step controls the imaging step so as to image the subject with gradation on a high-luminance side expanded relative to a previously prepared gradation characteristic serving as a reference, and controls, in displaying the image data generated in the image processing step on the displaying means, an enhancement amount of display-luminance of the displaying means based on the expansion amount of gradation on a high-luminance side in the imaging step.

### ADVANTAGEOUS EFFECTS OF INVENTION

According to the present invention, it is possible to provide an imaging device, an imaging method, and an image display device capable of providing a display image with a dazzling feeling and expressing high presence by performing sufficient gradation expression from "highlight" to "highest light".

### BRIEF DESCRIPTION OF THE DRAWINGS

FIG. 1A is a block diagram mainly illustrating an electric configuration of a camera according to an embodiment of the present invention.
FIG. 1B is a block diagram mainly illustrating the electric configuration of the camera according to an embodiment of the present invention.
FIG. 2 is a graph illustrating a relationship between the luminance of a scene and a display characteristic in a display section in the camera according to an embodiment of the present invention.
FIG. 3 is a flowchart illustrating an operation of the camera according to an embodiment of the present invention.
FIG. 4 is a graph illustrating a relationship (initial condition) between the luminance of a scene and a histogram of image data in the camera according to an embodiment of the present invention.
FIG. 5 is a graph illustrating a relationship (at the time of high-luminance expansion) between the luminance of a scene and a histogram of image data in the camera according to an embodiment of the present invention.
FIG. 6 illustrates an example of imaging areas (display areas) and a scene in the camera according to an embodiment of the present invention.
FIG. 7 is a graph illustrating a relationship between the percentage of high luminance and a high-luminance expansion width in the camera according to an embodiment of the present invention.
FIG. 8 illustrates a relationship between the high-luminance expansion width for imaging and the high-luminance expansion width for displaying, in the camera according to an embodiment of the present invention.
FIG. 9 is a flowchart illustrating an operation of a camera according to a modification example of an embodiment of the present invention.
FIG. 10 is a flowchart illustrating a reproduction operation of a camera according to a modification example of an embodiment of the present invention.

### Detailed Description of the Preferred embodiments

Hereinafter, an example applied to a digital camera as an embodiment of the present invention will be described. This digital camera includes an imaging circuit, which converts a subject image to image data, and live-view displays, based on this converted image data, the subject image on a display section, such as a rear display, arranged in the rear of a main body. A photographer determines a composition and/or shutter chance by observing the live-view display. In a release operation, image data is recorded on a recording medium. The image data recorded on the recording medium can be reproduced and displayed on the display section, such as a rear display, once a reproduction mode is selected.

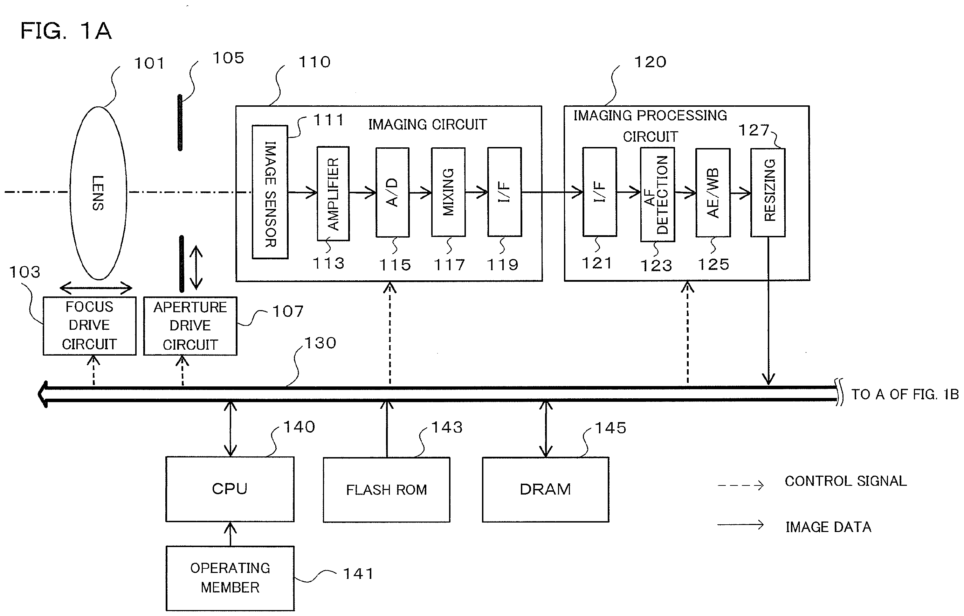

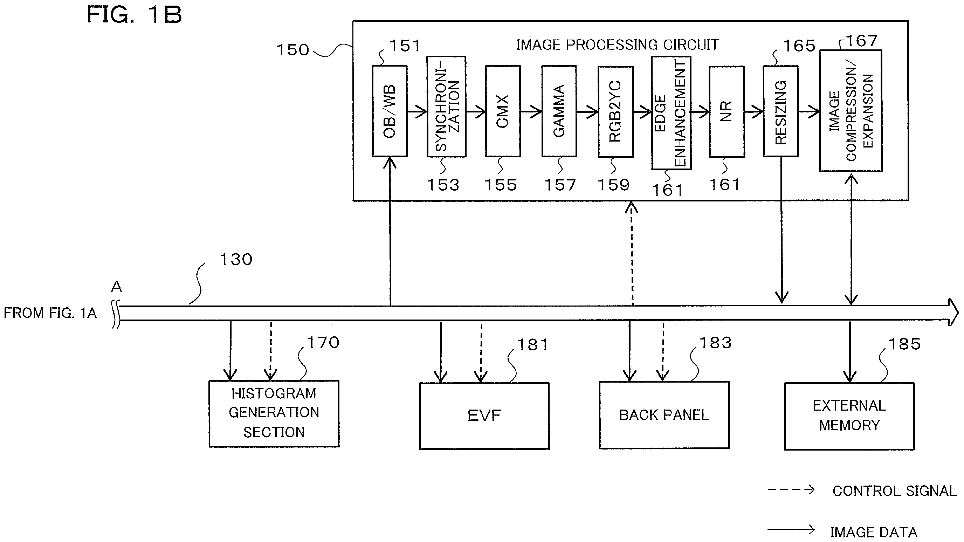

FIG. 1 is a block diagram mainly illustrating an electric configuration of a camera according to an embodiment of the present invention.

A photographic lens 101 includes a plurality of optical lenses (including a focus lens for focus adjustment) for forming a subject image, is a single focus lens or a zoom lens, and is arranged inside a fixed or interchangeable lens barrel. Moreover, the photographic lens 101 is movable in an optical axis direction by a focus drive circuit 103, and the focusing position thereof is controlled by moving the focus lens inside the photographic lens 101 based on a control signal from a CPU (Central Processing Unit) 140 described later, and in the case of the zoom lens, the focal length thereof is also controlled by moving a zoom lens group by a non-illustrated zoom drive circuit. Note that, the focus drive circuit 103 and the zoom drive circuit include various circuits and the like for performing the drive and position control of the focus lens and the zoom lens, such as an actuator for driving the focus lens and the zoom lens, a focus driving mechanism, and a lens position detector.

An aperture 105 is arranged backward along the optical axis of the photographic lens 101. The aperture 105 has a variable opening diameter and controls the light amount of a subject light flux passing through the photographic lens 101. An aperture drive circuit 107 controls the opening diameter of the aperture 105, based on a control signal from the CPU 140. Note that, the aperture drive circuit 107 includes various circuits and the like for performing the drive and position control of the aperture 105, such as the driving actuator and driving mechanism of the aperture 105, and the aperture position detector.

The subject image formed by the photographic lens 101 is converted to image data by an imaging circuit 110. This imaging circuit 110 functions as imaging means for imaging a subject under a predetermined imaging condition and outputting imaging data. The imaging circuit 110 includes an image sensor 111, an amplifier (A-Gain) 113, an A/D converter 115, a mixing circuit (MIX) 117, and an interface (I/F) 119. The imaging circuit 110 reads and processes, via a bus 130, an image signal from the image sensor 111 in response to a control signal from the CPU 140, and outputs image data to an imaging processing circuit 120.

The image sensor 111 is arranged on the optical axis of the photographic lens 101 and near the image forming position of a subject image. The image sensor 111 includes a plurality of pixels each having a photoelectric conversion circuit which converts a subject image (optical image) to an electric signal. That is, in the image sensor 111, photodiodes constituting each pixel are two-dimensionally arranged in a matrix, each photodiode generates a photo-electrically converted current corresponding to the amount of received light, and this photo-electrically converted current is accumulated as a charge by a capacitor connected to each photodiode. An RGB filter of Bayer array is arranged in the front face of each pixel. The plurality of photodiodes corresponds to the plurality of pixels described above.

Moreover, the plurality of pixels of the image sensor 111 includes a phase-difference pixel (referred to also as a "focus detection pixel") configured to restrict the incidence direction of the light flux entering the pixel, and an imaging pixel which is configured so that the light flux entering the pixel is less restricted than the phase-difference pixel.

The output of the image sensor 111 is output to the amplifier 113. The amplifier 113 amplifies, by a predetermined gain, an analog image signal output from the image sensor 111. The output of the amplifier 113 is output to the A/D converter 115. The A/D converter 115 analog-to-digital converts the analog image signal, and outputs the resulting image data to the mixing circuit 117.

At the time of live-view display or moving image photographing, the mixing circuit 117 adds pieces of the image data coming from a plurality of pixels, and outputs the result to the I/F 119. That is, the mixing circuit 117 mixes and reads the pixel signals of the image sensors and outputs a mixed pixel output. Note that, although in this embodiment, mixing of the signals from the pixels is performed after A/D conversion, it may be performed before A/D conversion or may be performed in reading the image signal from the image sensor 111.

The output of the mixing circuit 117 is output to an I/F 121 of the imaging processing circuit 120 via the I/F 119. The image data is communicated between the I/F 119 and the I/F 121 at high speed.

The imaging processing circuit 120 performs various kinds of imaging processing on the image data output from the imaging circuit 110, in accordance with a control signal from the CPU 140, and outputs the result to the bus 130. The imaging processing circuit 120 includes the I/F 121, an AF detection circuit 123, an AE/WB circuit 125, and a resizing circuit 127. Note that, although each circuit may serially process image data along the image data flow in the view, each circuit is allowed to separately process the image data.

The image data received by the I/F 121 is output to the AF detection circuit 123. The AF detection circuit 123 extracts only the image data from a phase-difference pixel in the image data. An imaging pixel and a phase-difference pixel are mixed at a predetermined cycle inside the image sensor 111. Because the pixel data of these pixels are read out in the horizontal direction, the AF detection circuit 123 extracts only the pixel data of the phase-difference pixel.

The pixel data of a phase-difference pixel extracted by the AF detection circuit 123 is input to the CPU 140 via the bus 130. The CPU 140 performs the AF calculation based on a phase-difference detection scheme by using the pixel data of a phase-difference pixel. Then, the CPU 140 performs auto-focusing by controlling the movement of the focus lens by the focus drive circuit 103, based on the result of the AF calculation.

The AE/WB circuit 125 includes an AE circuit and a WB circuit. The AE (Automatic Exposure) circuit detects the signal corresponding to the luminance of a subject from image data, and outputs the same as a luminance signal. Moreover, the WB (White Balance) circuit detects a white balance gain to be multiplied to an R signal and a B signal, in order to perform white balance processing of image data.

The resizing circuit 127 changes the size of image data. At the time of live-view display or moving image photographing, the image size does not need to be as large as the size at the time of still image photographing. The resizing circuit 127 performs resizing in accordance with the size of an image required for live-view display or moving image photographing. Reduction in image size enables quick processing.

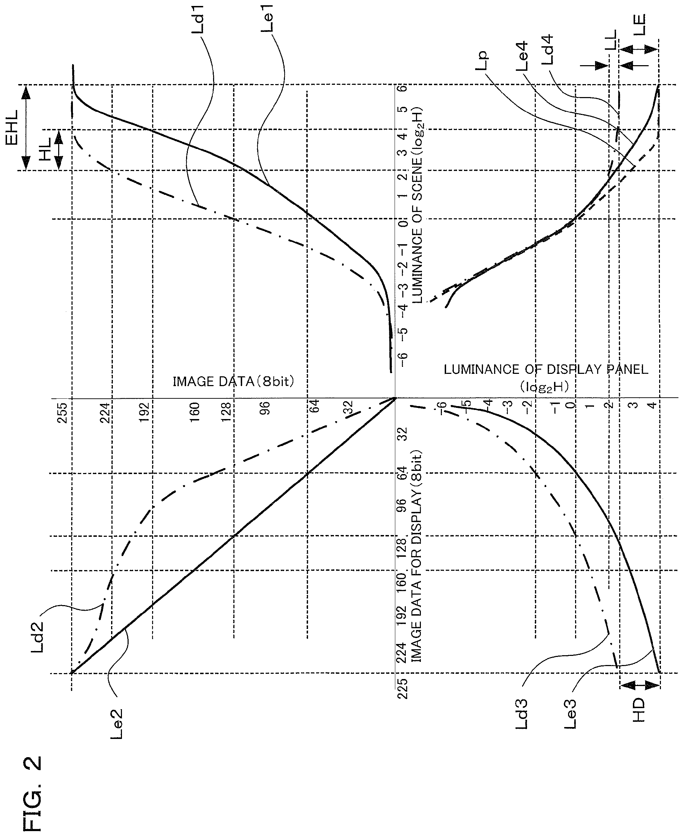

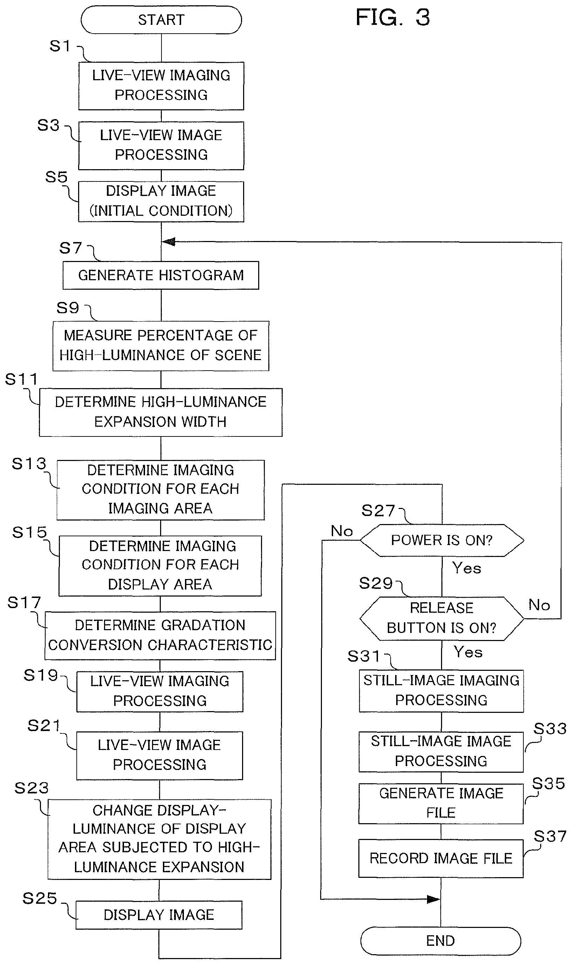

The CPU 140 functions as the control circuit of this whole camera, and generally controls the various sequences of the camera in accordance with a program stored on a flash ROM 143. The CPU 140 functions as controlling means for controlling the imaging condition in the imaging means and an enhancement amount of display-luminance in the displaying means (e.g., see S11 to S17 of FIG. 3). This controlling means controls (e.g., see S11 and S13 of FIG. 3) the imaging means so as to image a subject with gradation on a high-luminance side expanded relative to a previously prepared gradation characteristic (e.g., see a gradation characteristic Ld1 under the initial condition of FIG. 2) serving as a reference, generates image data using the image processing means (e.g., see a gradation characteristic Le1 at the time of high-luminance expansion of FIG. 2), and controls, in displaying this image data on the displaying means, the enhancement amount of display-luminance of the displaying means based on the expansion amount of gradation on the high-luminance side of the imaging means (e. g. , see a high-luminance expansion area HD for display illustrated in the third quadrant of FIG. 2, and S15 of FIG. 3).

Moreover, the CPU 140 functions also as controlling means for determining the expansion amount of gradation on the high-luminance side of the imaging means , based on the measured luminance distribution (e.g., see S11 of FIG. 3).

Other than the above-mentioned bus 130, an operating member 141 is connected to the CPU 140. The operating member 141 includes the operating members, such as various input buttons and various input keys, such as a power button, a release button, a video button, a reproduction button, a menu button, a cross key, and an OK button, and detects the operating statuses of these operating members and outputs the detection result to the CPU 140. The CPU 140 performs various sequences corresponding to the operation of a user, based on the detection result of an operating member from the operating member 141.

The flash ROM 143 stores a program for performing various sequences of the CPU 140. The CPU 140 controls the whole camera based on the program.

A DRAM 145 is an SDRAM (Synchronous Dynamic Random Access Memory), for example, and is a volatile memory, such as an electrically rewritable volatile memory, for temporary storage of image data and the like. This DRAM 145 temporarily stores the image data output from the imaging circuit 110 and processed by the imaging processing circuit 120 and the image data processed in an image processing circuit 150 or the like described later.

The image processing circuit 150 is connected to the bus 130. The image processing circuit 150 performs image processing of the image data output from the imaging processing circuit 120. The image processing circuit 150 includes an OB/WB circuit 151, a synchronization circuit 153, a color matrix circuit (CMX) 155, a gamma conversion circuit 157, an RGB2YC circuit 159, an edge enhancement circuit 161, an NR circuit 163, a resizing circuit 165, and an image compression/expansion circuit 167. Note that, although each circuit may serially process image data along the image data flow in the view, each circuit is allowed to separately process the image data.

The OB/WB circuit 151 includes an OB (Optical Black) circuit and a WB (White Balance) circuit. The OB circuit subtracts, from the pixel data expressing a subject image, the pixel data coming from a light-shielding section provided in the image sensor 111 to remove the noise, such as dark current, caused by an image sensor. Moreover, the WB circuit performs white balance processing of image data as with the WB circuit inside the imaging processing circuit 120.

The synchronization circuit 153 generates each pixel data of RGB at each pixel position using the data from the respective different positions. For example, the pixel value of a color component which does not exist for each color is calculated through interpolation from peripheral pixels. The color matrix circuit (CMX) 155 corrects each data of RGB into ideal image data of RGB taking into consideration the spectral sensitivity characteristic of the image sensor 111, the spectral transmission characteristic of an optical system, and the like.

The gamma conversion circuit 157 performs the correction for keeping substantially linear the amount of light of a subject when photographed with a camera and the display-luminance in the display section, such as an EVF 181 and a back panel 183, and at the same time making the gradation characteristic of a display image look favorable. The RGB2YC circuit 157 performs the conversion from a color space of RGB to a color space of luminance and color difference. The RGB2YC circuit 157 performs color difference correction after YC conversion, using the RGB image data after gamma conversion.

The edge enhancement circuit 161 performs the image processing for enhancing the contour part inside an image. The NR (Noise Reduction) circuit 163 removes the noise contained in image data by performing the coring processing or the like corresponding to a frequency. The resizing circuit 165 changes the size of image data as with the resizing circuit 127 inside the imaging processing circuit 120. The image compression/expansion circuit 167 performs the compression for JPEG, MPEG, or the like on image data, and performs the expansion of compressed data.

The image processing circuit 150 functions as image processing means for generating, from imaging data, the image data to be displayed on the displaying means. Based on the expansion amount of gradation on the high-luminance side of the imaging means (e.g., see a difference between a high-luminance area EHL imaged at the time of high-luminance expansion of FIG. 2 and a high-luminance area HL serving as a reference), and an input-output characteristic of the displaying means making display-luminance brighter (e.g. , see Le3 of FIG. 2), this image processing means performs gradation conversion (e.g., see the gradation characteristic Le1 at the time of high-luminance expansion of FIG. 2) on the imaging data output from the imaging means to generate the image data to be displayed on the displaying means.

A histogram generation section 170 is connected to the bus 130. This histogram generation section 170 receives the image data, which is processed by the image processing circuit 150, and generates a histogram. The histogram generation section 170 compares the luminance value of each pixel of the image data with a plurality of values, and outputs the data obtained by counting the number of luminance values of a pixel included in each area. The histogram generation section 170 may be configured from a hardware circuit, such as an ASIC (Application Specific Integrated Circuit) including a central processing unit (CPU), and achieve the function of the histogram generation section 170 through software. Moreover, other than this, the CPU 140 may achieve the function by software. The histogram generation section 170 functions as luminance-distribution measuring means for measuring the luminance distribution of a subject field. The histogram will be described in detail in S7 of FIG. 3, FIG. 4 and FIG. 5, etc.

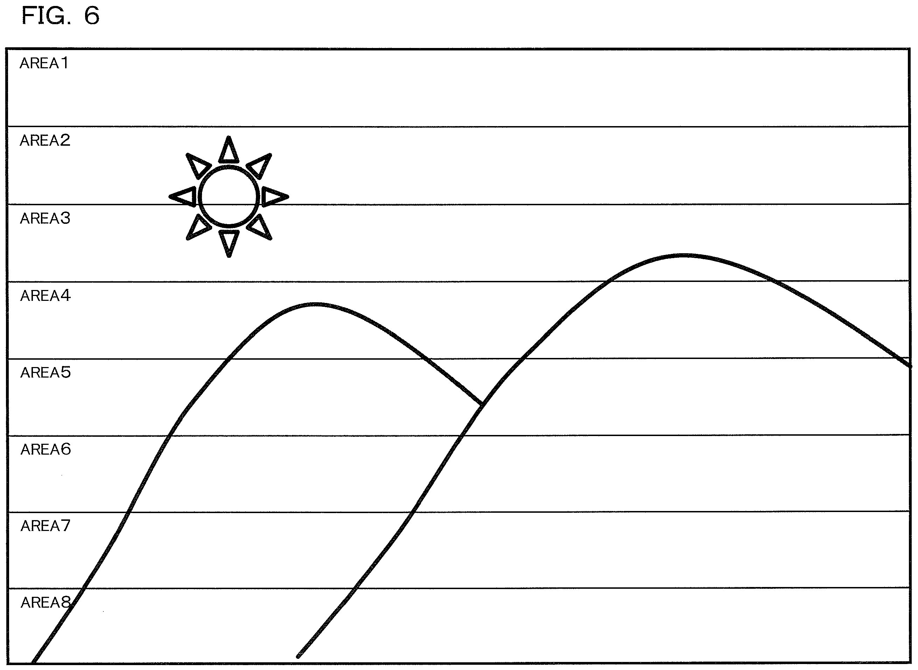

The EVF (Electrical View Finder) 181 connected to the bus 130 is an electronic viewfinder, and performs the live-view display or the like of a subject image, based on the image data from the image processing circuit 150. A user can observe a live-view display or the like by looking into the EVF from an eyepiece section. Moreover, the EVF 181 is capable of changing the display-luminance for each display area corresponding to an imaging area (see Areas 1 to 8 illustrated in FIG. 6) described later. The EVF 181 functions as displaying means capable of enhancing display-luminance of image data more than a predetermined reference luminance.

The back panel 183 connected to the bus 130 includes a display, such as a liquid crystal panel, and performs the live-view display or the like of a subject image, based on the image data from the image processing circuit 150. A user can directly observe the back panel 183 without through the eyepiece section.

An external memory 185 connected to the bus 130 is a recording medium mountable on a camera body, and includes a nonvolatile memory, such as an electrically-rewritable nonvolatile memory. The image processing circuit 150 can record the image data, which was image-processed for recording, and read out the image data.

Next, a relationship between the luminance of a scene and the display characteristic in the EVF will be explained using FIG. 2. First, an initial condition (default) indicated with a one-dot chain line inside the graph will be explained.

In the first quadrant (upper right portion of the graph) of FIG. 2, the horizontal axis represents the luminance of a scene, while the vertical axis represents the value of image data (in this example, the image data has 8 bits). Here, H is a relative subject luminance when the subject luminance of 18% gray, which is the correct exposure, is normalized as (log₂H=0), and the horizontal axis expresses H in logarithm (long2). The first quadrant illustrates a relationship between the luminance of a scene and image data, and the curve Ld1 expresses the gradation characteristic under the initial condition. For example, in the case of the subject luminance (log₂H=0) of 18% gray which is the correct exposure, the image data indicates 128 with 8 bits. In the gradation characteristic under this initial condition, the luminance of a high-luminance area HL is two to four (luminance brighter by two to four levels than the correct exposure), and the image data here indicates 224 to 256 with 8 bits. Therefore, the image data will not be saturated until the luminance of a scene exceeds four and accordingly the luminance can be expressed on the display panel. However, if the luminance of a scene exceeds four, the image data will be saturated and the luminance cannot be expressed on the display panel.

In the second quadrant (upper left portion of the graph) of FIG. 2, the horizontal axis represents the value of image data for display (in this example, display image data is expressed with 8 bits), while the vertical axis is the image data. The second quadrant illustrates a relationship between image data and the image data for display, and a curve Le2 expresses the gradation conversion characteristic for display. Under the initial condition (default), the image data for display has a linear relationship with respect to image data. That is, the image data processed by the imaging processing circuit 120 is employed as the image data for display, as is.

In the third quadrant (lower left portion of the graph) of FIG. 2, the horizontal axis represents the value of the image data for display, while the vertical axis represents the luminance value of the display panel. Here, the luminance of the display panel relative to the correct exposure level (H=1) of a scene is defined as H'=1. The third quadrant illustrates the luminance which is displayed on the display panel based on the image data for display, and a curve Ld3 expresses the display-luminance characteristic under the initial condition. Under the initial condition (default), the luminance on the display panel is three even when image data for display has a large value, and a bright display sufficiently corresponding to high luminance is not obtained.

In the fourth quadrant (lower right portion of the graph) of FIG. 2, the vertical axis represents the luminance value of the display panel, while the horizontal axis represents the luminance value of a scene. The fourth quadrant illustrates a relationship between the luminance of the display panel and the luminance of a scene, and a curve Ld4 expresses the display characteristic under the initial condition (default), i.e., expresses a relationship between the luminance of a scene and the luminance of an image to be displayed when the image data for display, which is captured with the gradation Ld1 and subjected to the gradation conversion and furthermore subjected to the gradation conversion with the gradation conversion Le2 for display (substantially subjected to no conversion), is displayed on the display panel with the display-luminance characteristic Ld3. Under the initial condition, when a scene is dark, the luminance of the display panel corresponding to the luminance of the scene is obtained. However, when a scene is bright (the luminance of a scene is two or more), a change in luminance of the display panel relative to a change in luminance of a scene is compressed to the minimal, resulting in a display having poor gradation expression of a bright portion of a scene and thus lacking presence.

Note that, the one-dot chain line Ld2 in the second quadrant and a broken line Lp in the fourth quadrant of FIG. 2 express the display gradation conversion characteristic and a display characteristic indicative of a relationship between the scene luminance and the luminance of the display panel when the technique of the above-mentioned Patent Literature 1 is employed. Ld2 is a gradation conversion characteristic for display to be applied when the image data, which is captured and subjected to gradation conversion with the gradation conversion characteristic Ld1, is displayed with the display-luminance characteristic Le3, and has a characteristic having a dark portion compressed and a bright portion expanded. According to this technique, within the range of two to four of the luminance of a scene, a change in luminance of the display panel relative to a change in luminance of the scene increases, but once the luminance of a scene exceeds four, then the brightness will be saturated as in the case of the initial condition, resulting in a poor gradation expression of the high luminance portion of the scene.

Next, a case will be explained where the high-luminance expansion has been performed. The solid line in the graph of FIG. 2 expresses the characteristic when the high-luminance expansion has been performed.

The first quadrant (upper right portion of the graph) of FIG. 2 illustrates the relationship between the luminance of a scene and the image data, as previously described, and the curve Le1 expresses the gradation characteristic at the time of high-luminance expansion. At the time of high-luminance expansion, the expansion characteristic shifts to the right as a whole and will not be saturated even on the high-luminance side, as compared with the expansion characteristic under the initial condition indicated by a one-dot chain line. That is, in the case of a subject with 18% gray which corresponds to correct exposure, the image data indicates near 64 with 8 bits, and the image data will not be saturated even when the luminance exceeds four. That is, the image data is not saturated even in the high-luminance area EHL which is imaged at the time of high-luminance expansion. Therefore, even when the luminance of a scene exceeds four, the image data will not be saturated and accordingly the brightness can be expressed on the display panel.

The second quadrant (upper left portion of the graph) of FIG. 2 illustrates the relationship between image data and the image data for display, as previously described, and the straight-line Le2 expresses the gradation conversion characteristic for display. At the time of high-luminance expansion, the image data for display has a linear relationship with respect to image data. That is, the image data processed by the image processing circuit 150 is employed as the image data for display, as is.

The third quadrant (lower left portion of the graph) of FIG. 2 illustrates the luminance which is displayed on the display panel based on the image data for display, as previously described, and the curve Le3 expresses the display-luminance characteristic at the time of high-luminance expansion. At the time of high-luminance expansion, as the size of the image data for display increases, the luminance of the display panel will also increase, resulting in bright display sufficiently corresponding to high luminance. As illustrated in the third quadrant of FIG. 2, at the time of high-luminance expansion the display range expands by the high-luminance expansion area HD for display and the high luminance can be expressed.

The fourth quadrant (lower right portion of the graph) of FIG. 2 illustrates the relationship between the luminance of the display panel and the luminance of a scene, as previously described, and the curve Le4 expresses the display characteristic at the time of high-luminance expansion. At the time of high-luminance expansion, as a scene varies from a dark one to a brighter one, the luminance of the display panel also varies accordingly. In particular, even when a scene is bright (the luminance of the scene is two or more), the brightness of a display panel corresponds to the brightness of a scene, without saturation of the luminance of the display panel. That is, although in the display characteristic under the intimal condition, the high-luminance area of the display image corresponding to the high-luminance area HL of a scene is LL, the high-luminance area expands toward LE due to high-luminance expansion.

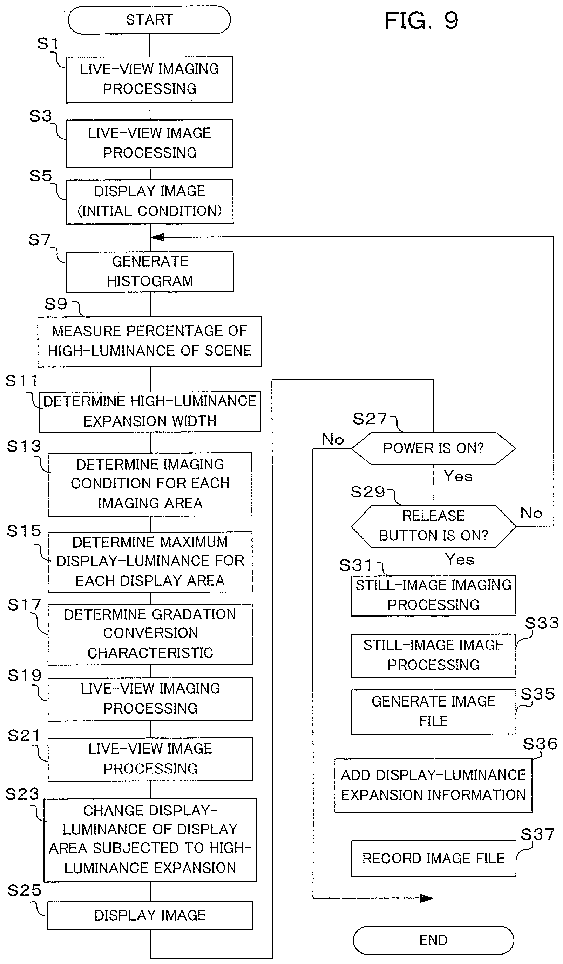

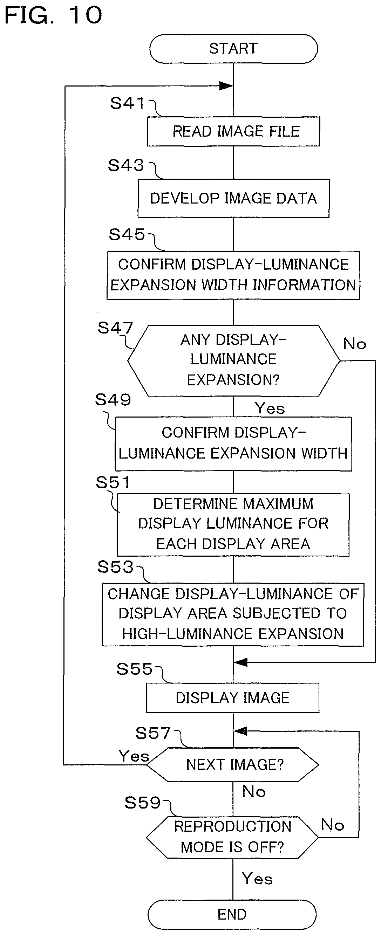

Next, the operation in this embodiment will be explained using a flowchart illustrated in FIG. 3. Note that, the CPU 140 executes the flowchart illustrated in FIG. 3 (including also FIG. 9 and FIG. 10 described later), by controlling each circuit in accordance with a program stored in the flash ROM 143. Moreover, these flowcharts are only for the operation related to the gradation characteristic processing among the operations of a camera, and other operations are omitted.

Once the power switch of the operating member 141 is ON, the flow illustrated in FIG. 3 is started. First, live-view imaging processing is performed (S1). Here, under the initial condition (default, condition illustrated by the curve Ld1) illustrated in FIG. 2, the imaging circuit 110 and the imaging processing circuit 120 convert a subject image to image data, and perform imaging processing for live view.

Once the live-view imaging processing is performed, then live-view image processing is performed (S3). Here, in accordance with the gradation characteristic under the initial condition (conditions indicated by the curve Ld1) illustrated in FIG. 1 and the gradation characteristic for display under the initial condition (the conditions indicated by the straight-line Le2, actually corresponding to no-conversion) illustrated in FIG. 2, the image processing circuit 150 performs the image processing for live-view display of the image data captured in step S1.

Once the live-view image processing is performed, an image is then displayed (under the initial condition) (S5). Here, under the initial condition, the data for display image-processed in step S3 is displayed on the EVF 181. Because the data for display is displayed under the initial condition, a high-luminance scene is not displayed with a sufficient brightness, as illustrated in the fourth quadrant of FIG. 2.

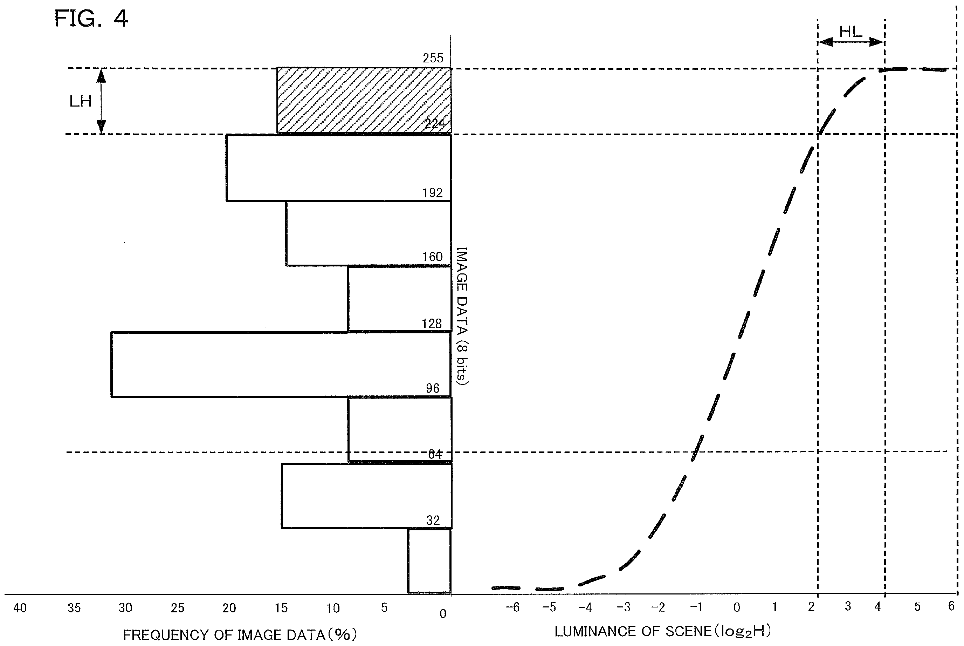

Once an image is displayed under the initial condition, a histogram is then generated (S7). Here, the histogram generation section 170 generates the histogram of the data for display. An example of generating the histogram under the initial condition will be explained using FIG. 4. In FIG. 4, the horizontal axis represents the frequency of image data and the luminance of a scene (luminance is expressed in log₂), while the vertical axis represents the image data value.

In the example illustrated in FIG. 4, the image data is divided into eight levels: 0 to 31, 32 to 63, 64 to 95, 96 to 127, 128 to 159, 160 to 191, 192 to 223, and 224 to 255, to generate the histogram. The luminance of a scene corresponding to the image data is illustrated on the right side of FIG. 4. The area (indicated by a shaded area in the view) of 224 to 255 of the image data is the high-luminance area LH. A scene whose luminance is in a range of 2 to 4 (high-luminance area HL) can be expressed to some extent (however, the change in luminance becomes small). However, if the portion whose luminance exceeds four increases in a scene, the image data will be saturated and a high-luminance scene cannot be expressed.

Moreover, in generating the histogram in step S7, the imaging area is divided into a plurality of areas, and the histogram is generated for each area. An example of setting for each imaging area will be explained using FIG. 6. The imaging area illustrated in FIG. 6 is divided into eight areas: Area 1 to Area 8, each having a belt-like shape. The display area in the EVF 181 is also divided into belt-like shapes in accordance with dividing of the imaging area. For example, the area to be displayed based on the imaging data corresponding to Area 1 of the imaging area is referred to as Area 1 for display.

In generating the histogram, in the example illustrated in FIG. 6 there is a normal-luminance subject (mountain) in Area 4 to Area 8, while in Area 2 and Area 3 there is a high-luminance subject (sun). The high-luminance subject is displayed so as to correspond to the luminance thereof by performing high-luminance expansion, as described later. Note that, the number of imaging areas is not limited to eight, but may be greater or less than eight. Moreover, when a CMOS image sensor is used as the image sensor 111, the imaging area can be set by being further divided in the horizontal direction.

Once the histogram is generated in step S7, the percentage of high luminance of a scene is then measured (S9). Under the initial condition, the high-luminance area LH corresponds to the image data in a range of 224 to 255 with 8 bits. In this step, the CPU 140 measures the percentage of image data included in the high-luminance area LH, based on the histogram generated by the histogram generation section 170. In the example illustrated in FIG. 4, the high-luminance area LH exceeds 15%.

Once the percentage of high luminance of a scene is measured in step S9, the high-luminance expansion width is then determined (S11). Here, in accordance with the percentage of high luminance, the CPU 140 determines the high-luminance expansion width of each imaging area to be employed for the next frame. That is, when the percentage of the image data included in the high-luminance area LH is high as illustrated in FIG. 4, the high-luminance area LH is expanded since the brightness of a high-luminance subject cannot be fully expressed, as previously described. The width to expand the high-luminance area LH is determined in accordance with the percentage of high luminance, as a design matter, as needed.

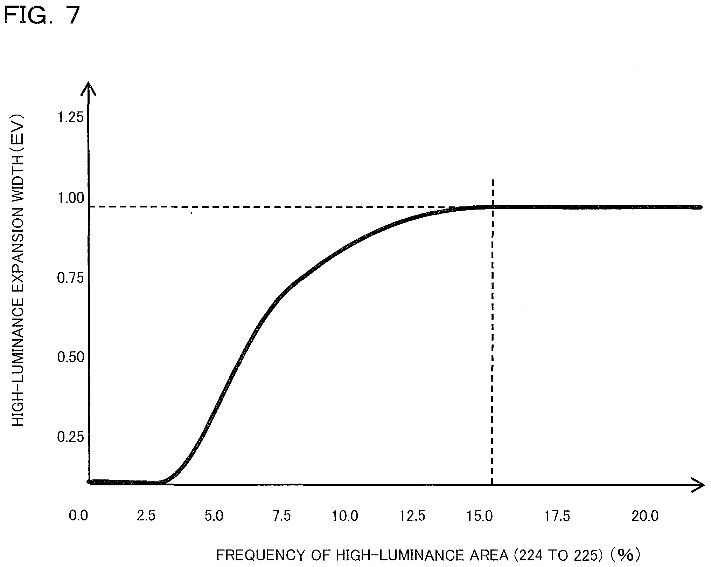

An example of this high-luminance expansion width is illustrated in FIG. 7. In FIG. 7, the horizontal axis represents the frequency of the high-luminance area LH, while the vertical axis represents the high-luminance expansion width. In the example illustrated in FIG. 7, when the frequency of the high-luminance area is 15%, the high-luminance expansion width is set to 1 EV. When the frequency of high luminance exceeds 15%, the expansion width will be set to be constant at 1 EV, while when the frequency becomes less than 15%, the expansion width is reduced in accordance with this frequency. As described above, in determining the high-luminance expansion width, the expansion width has an upper limit so as to suppress an abrupt change.

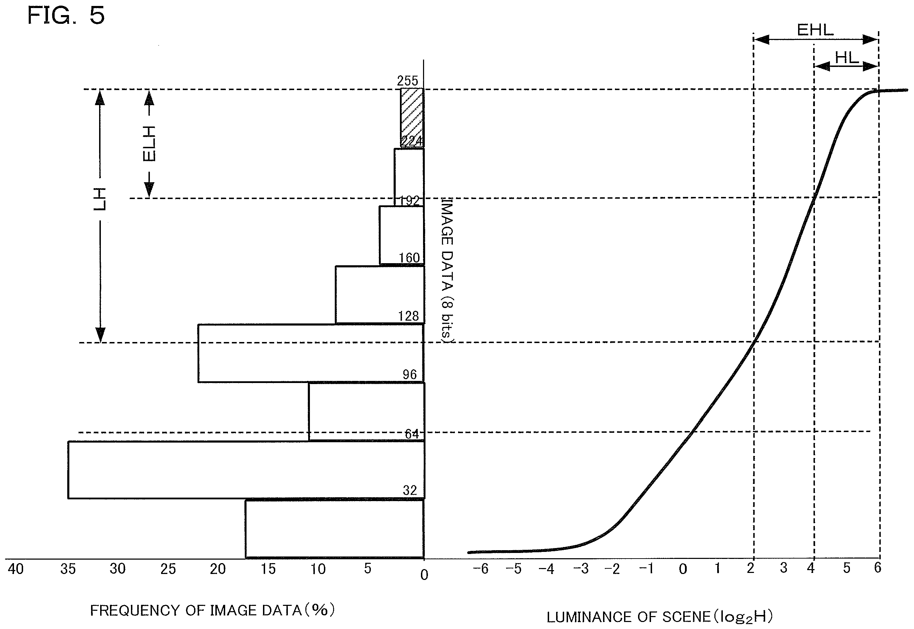

The high-luminance area expansion width in step S11 will be explained using FIG. 5. In FIG. 5, as with FIG. 4, the horizontal axis represents the frequency of image data and the luminance of a scene (luminance is expressed in log₂), while the vertical axis represents the image data value. At the time of high-luminance expansion, in this example the high-luminance expansion area HL corresponds to the luminance of a scene in a range from 4 to 6, and the image data (ELH) corresponding to HL indicates near 192 to 255 with 8 bits. Moreover, the high-luminance area EHL including the high-luminance expansion area has the scene luminance in a range from 2 to 6, and the image data (LH) corresponding to EHL is in a range from near 128 to 255 with 8 bits.

At the time of high-luminance expansion, as understood by comparing the graph on the right of FIG. 4 with the graph on the right of FIG. 5, the high luminance area expands to the high-luminance area EHL to be imaged in addition to the high-luminance expansion area HL, so that a subject on a high-luminance side can be expressed brightly corresponding to the luminance.

Once the high-luminance expansion width is determined in step S11, the imaging condition for each imaging area is then determined (S13). Here, the CPU 140 determines the imaging condition (exposure time) for each imaging area based on the high-luminance expansion width for each imaging area. As explained using FIG. 6, depending on an imaging area a high-luminance subject exists, while there is also an imaging area in which a high-luminance subject does not exist. Then, in this embodiment, an optimal high-luminance expansion width is determined for each imaging area.

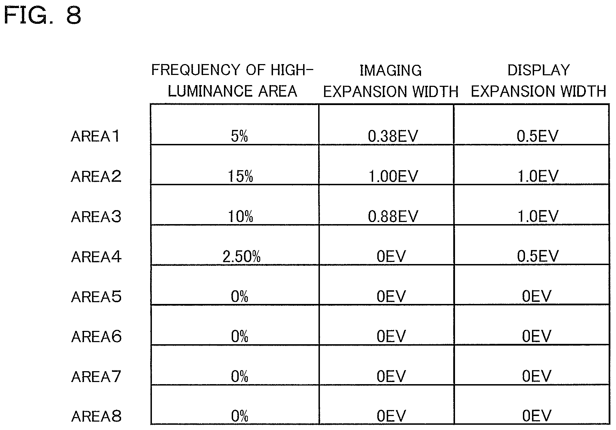

That is, in step S13, the exposure time for each area is determined based on the high-luminance expansion width determined in step S11. For example, in the example illustrated in FIG. 8, because in Area 1, the imaging expansion width in the high-luminance area is 0.38 EV, the exposure time is determined so as to become -0.38 EV relative to the current condition. Also for the other areas, the exposure time is determined based on the imaging expansion width illustrated in FIG. 8.

Once the imaging condition for each imaging area is determined, the maximum display-luminance for each display area is then determined (S15). Here, the CPU 140 determines the maximum display-luminance for each display area corresponding to each imaging area. That is, the brightness of the backlight of the EVF 181 is determined. This maximum display-luminance corresponds to the high-luminance expansion area HD for display illustrated in the third quadrant of FIG. 2. Moreover, the maximum display-luminance is determined for each display area, and in the example illustrated in FIG. 8, the display expansion width is 0.5 EV in Area 1. Therefore, the maximum display-luminance is determined so that the backlight becomes brighter by 0.5 EV relative to the current condition. Also for the other areas, the brightness of the backlight of the EVF 18 is determined based on the display expansion width illustrated in FIG. 8.

Once the maximum display-luminance for each display area is determined, the gradation conversion characteristic is then determined (S17). Here, the CPU 140 determines the gradation conversion characteristic (gamma table) for each imaging area based on the high-luminance expansion width determined in steps S11 and S13. This gradation conversion characteristic is an overall characteristic of the curves depicted in the first quadrant (upper right portion of FIG. 2) and second quadrant (upper left of FIG. 2) of FIG. 2, i.e., the conversion characteristic into the image data for display of the luminance of a scene. The gamma conversion circuit 157 (see FIG. 1B) performs, at the time of live-view display, the gamma conversion of image data using this gradation conversion characteristic (see step S21 described later).

Once the gradation conversion characteristic is determined, the live-view imaging processing is then performed (S19). Here, the imaging circuit 110 and the imaging processing circuit 120 perform the imaging processing of the live-view based on the imaging condition determined in step S13.

Once the live-view imaging processing is performed, the live-view image processing is then performed (S21). Here, the image processing circuit 150 (including the gamma conversion circuit 157) performs the image processing of the captured image data based on the determined gradation conversion characteristic. Note that, in this embodiment, the gradation conversion characteristic may differ for each imaging area, and in this case the image processing of the image data is performed based on the gradation conversion characteristic determined for each imaging area.

Once the live-view image processing is performed, the display-luminance of a display area to be subjected to the high-luminance expansion is then changed (S23). Here, the CPU 140 changes the display-luminance of the EVF 181 in accordance with the maximum display-luminance determined in step S15. Note that, in this embodiment, the maximum display-luminance may differ for each imaging area (each display area), and in this case the display-luminance is changed to the display-luminance determined for each display area.

Once the display-luminance of the high-luminance expansion display area is changed, an image is then displayed (S25). Here, using the image data image-processed for live-view display in step S21, a live-view display is performed on the EVF 81.

Once an image is displayed, it is then determined whether or not the power switch is ON (S27). Here, the determination is made based on the operating status of the power switch which is one of the operating members 141. If the power switch is ON as the result of this determination, it is then determined whether or not the release button is ON (S29). Here, it is determined whether or not the release button which is one of the operating members 141 is fully pressed and a second release switch is ON. If the release button is not ON as the result of this determination, the flow then returns to step S7 and the above-described operation is repeated every time image data is read from the imaging circuit 110.

On the other hand, if the release button is ON as the result of the determination in step S29, still-image imaging processing is then performed (S31). Here, the imaging circuit 110 and the imaging processing circuit 120 obtain the image data for a still image based on the imaging conditions for a still image (shutter speed, aperture value, ISO sensitivity, etc.). Subsequently, the still image is image-processed (S33). Here, the image processing circuit 150 performs, on the image data of the still image obtained in step S31, the image processing for recording a still image.

Once the still-image image processing is performed, an image file is then generated (S35). Here, the CPU 140 generates the image file for recording based on the image data image-processed in step S33. Once the image file is generated, the image file is then recorded (S37). Here, the CPU 140 records the image file generated in step S35 in the external memory 185.

Once the image file is recorded in the external memory in step S37 or if the power switch is OFF as the result of the determination in step S27, this flow is terminated.

As described above, in this embodiment when there are many high-luminance areas inside the scene of a subject (in this embodiment, a total of high-luminance areas exceeds 15%), imaging is performed with the high-luminance area expanded (S11, S13) and the display-luminance of the display panel is increased in conjunction with the high-luminance expansion (S15). Moreover, a scene is imaged with the gradation from "highlight" to "highest light" of the scene by controlling the exposure time, as needed, based on the high-luminance expansion width for imaging and the input-output characteristic (the relationship between the input data and display-luminance) of the display panel with an increased display-luminance. Furthermore, the luminance of the display panel is controlled, as needed, and the gradation conversion taking into consideration the luminance range is performed, so that it is possible to provide a display image with a dazzling feeling and express high presence.

Moreover, in this embodiment, the imaging means allows the imaging condition for each of a plurality of areas to be changed (e.g., see S13 of FIG. 3, and FIG. 6), the displaying means allows the display-luminance to be enhanced for each display area which is provided so as to correspond to each area of the imaging data output from the imaging means (e. g. , see S15 of FIG. 3), the luminance-distribution measuring means allows to measure the luminance distribution of the subject field corresponding to each area of the imaging means (e.g., see S7 of FIG. 3, and the histogram generation section 170), and the controlling means determines the gradation expansion amount on the high-luminance side for each area of the imaging means based on the luminance distribution measured for each area (e.g., see S17 of FIG. 3), and controls the enhancement amount of display-luminance for each area of the displaying means based on the gradation expansion amount on the high-luminance side for each area of the imaging means (e.g., see S23 of FIG. 3). Therefore, as illustrated in FIG. 6, even when there is a high-luminance subject in a part inside a screen, the lightness and darkness of the whole screen can be expressed in well balance.

Next, a modification example of this embodiment will be explained using FIG. 9 and FIG. 10. In one embodiment of the present invention, the display image for a scene in a high-luminance area is provided with a dazzling feeling to express high presence in displaying a live-view. In contrast, in this modification example, as with this embodiment, the display image is provided with a dazzling feeling to express high presence not only in live-view display but also in reproducing and displaying a recorded image.

In this modification example, the back panel 183 illustrated in FIG. 1B is assumed to be able to change the display-luminance for each display area. In this modification example, the back panel 183 functions as displaying means capable of enhancing display-luminance of image data more than a predetermined reference luminance.

In this modification example, the flowchart of FIG. 3 according to one embodiment is replaced with a flowchart of FIG. 9 and furthermore a flowchart illustrated in FIG. 10 is added. Then, the operation in this modification example will be explained using the flowcharts illustrated in FIG. 9 and FIG. 10. Note that, the flowcharts illustrated in FIG. 9 and FIG. 10 are executed by the CPU 140 which controls each circuit in accordance with a program stored in the flash ROM 143. Moreover, these flowcharts are only for the operation related to the gradation characteristic processing among the operations of a camera, and other operations are omitted.

The flowchart illustrated in FIG. 9 illustrates the main flow of this modification example, and differs from the flowchart illustrated in FIG. 3 in only that step S36 is added. The step of performing the similar processing is given the identical step number to omit the duplicated explanation, and the different step S36 will be focused and explained.

Once it is determined that the release button is ON in step S29, still-image imaging processing is then performed (S31), still-image image processing is performed (S33), and an image file is generated (S35). Once the image file is generated, display-luminance expansion information is then added (S36). Here, the maximum display-luminance for each display area determined in step S15 is added to the image file generated in step S35.

Once the display-luminance expansion information is added, the image file is then recorded (S37). Here, the image file which is generated in step S35 and to which the display-luminance expansion information is added in step S36 is recorded in the external memory 185. Once the image file is recorded in step S37 and also if the power is OFF as the result of the determination in step S27, the flow illustrated in FIG. 9 is then terminated.

Next, the operation at the time of reproduction will be explained using the flowchart illustrated in FIG. 10. The flow illustrated in FIG. 10 is started when a reproduction mode is ON. Once a reproduction button or the like in the operating member 141 is operated, the reproduction mode is turned on.

Once the flow illustrated in FIG. 10 is started, the image file is then read (S41). Here, the CPU 140 reads, from the external memory 185, the image file recorded in step S37.

Once the image file is read, image data is then developed (S43). Here, the image compression/expansion circuit 167 inside the image processing circuit 150 expands the image file read in step S41, and transfers the resulting file to the DRAM 145.

Once the image data is developed, display-luminance expansion width information is then confirmed (S45). Here, the CPU 140 confirms the presence or absence of the display-luminance expansion width information inside the image file read in step S41. As previously described, the display-luminance expansion information is added to the image file in step S36 when the high-luminance expansion has been performed. In this step, it is confirmed whether or not there is this added information.

Once the display-luminance expansion width information is confirmed, it is then determined whether or not there is any display-luminance expansion (S47). Here, the determination is made based on the confirmation result in step S45.

If there is any display-luminance expansion as the result of the determination in step S47, the display-luminance expansion width is confirmed (S49). Here, the CPU 140 confirms the display-luminance expansion width for each display area corresponding to each display area.

Once the display-luminance expansion width is confirmed, the maximum display-luminance for each display area is then determined (S51). Here, the CPU 140 determines the maximum display-luminance for each display area corresponding to each display area based on the display-luminance expansion information read from the image file.

Once the maximum display-luminance for each display area is determined, the display-luminance of a display area to be subjected to high-luminance expansion is then changed (S53). Here, the CPU 140 changes, for the back panel 183, the display-luminance of each display area based on the determined maximum display-luminance.

Once the display-luminance of the display area to be subjected to high-luminance expansion is changed, an image is then displayed (S55). Here, the recorded image is reproduced and displayed on the back panel 183, based on the image data read from the external memory 185 and image-processed for reproduction and display in the image processing circuit 150. In reproducing and displaying this recorded image, the display-luminance of the corresponding display area has been changed if the recorded image had been captured with high-luminance expansion. Therefore, the display image is provided with a dazzling feeling to express high presence.

Once the image is displayed in step S55, it is then determined whether or not there is any next image (S57). Here, it is determined whether or not the next image has been specified with an operation in the operating member 141. If there is a next image as the result of this determination, the flow returns to step S41 and the above-described operation will be repeated.

On the other hand, if there is no next image as the result of the determination in step S57, it is determined whether or not the reproduction mode is OFF (S59). Here, it is determined whether or not the reproduction mode has been canceled. If the reproduction mode is not OFF as the result of this determination, the flow returns to step S57. On the other hand, if the reproduction mode is OFF, the flow of the reproduction illustrated in FIG. 10 is terminated.

As described above, in this modification example, display-luminance expansion information is added and recorded in imaging (S36), and then in reproducing, the display-luminance expansion information is read and the high-luminance expansion display is performed. Therefore, also in reproducing and displaying, the display image is provided with a dazzling feeling to express high presence.

Moreover, an imaging device according to this modification example includes: displaying means (e.g., back panel 183) for allowing an image to be displayed based on an image file including image data generated by imaging a subject under a predetermined imaging condition and display-luminance expansion information (e.g., see S36 of FIG. 9), the displaying means being capable of enhancing display-luminance more than a predetermined reference luminance; and controlling means (e.g., CPU 140, S49 to S53 in FIG. 10) for changing the display-luminance in the displaying means in performing high-luminance expansion based on the display-luminance expansion information. Therefore, also in reproducing and displaying, a subject in a high-luminance area is provided with a dazzling feeling to express high presence.

As described above, in one embodiment or the modification example of the present invention, an imaging device is controlled so as to image a subject with gradation on a high-luminance side expanded relative to a gradation characteristic serving as a reference and generates image data, and controls, in displaying this image data on the displaying means, the enhancement amount of display-luminance of the displaying means based on the expansion amount of gradation on the high-luminance side. Therefore, a subject in a high-luminance area is provided with a dazzling feeling to express high presence.

Note that, in one embodiment or the modification example of the present invention, the EVF 181 and the back panel 183, as the displaying means, are capable of increasing (enhancing) the display-luminance more than the reference luminance. The displaying means is not limited to the EVF or the back panel, but may be any means having a display function. Moreover, although the displaying means is capable of enhancing the display-luminance for each area here, it may be capable of enhancing the display-luminance as the whole screen if a high-luminance area does not need to be taken into consideration for each area. In this case, the histogram generation section 170 may also be capable of generating a histogram as the whole screen.

Moreover, in one embodiment or the modification example of the present invention, the imaging processing circuit 120 and the image processing circuit 150 are configured separately from the microcomputer 140, it is needless to say that all or a part of functions of each circuit may be configured by software and performed by the microcomputer 140.

Moreover, in one embodiment or the modification example of the present invention, explanation is given using a digital camera as the device for imaging, but the camera may be a digital single-lens reflex camera or a compact digital camera, or may be a motion picture camera such as a video camera and a movie camera, or may be a camera built into a mobile phone, a smartphone, a mobile information terminal (PDA: Personal Digital Assist), a personal computer (PC), a tablet-type computer, a game machine or the like. In either case, the present invention is applicable to any device having a display function.

Moreover, in one embodiment or the modification example of the present invention, an example of an imaging device has been explained which includes an imaging circuit and performs displaying based on the image data obtained by this imaging circuit. However, the present invention is applicable also to cases where an imaging device does not include an imaging circuit and an image file generated by the imaging device is displayed on an image display device.

In addition, among the techniques described in this specification, with regard to the control described mainly using the flowcharts, there are many instances where the control can be set using programs and such programs may be stored in a recording medium or recording section. Recording the programs onto the recording medium or into the recording section may be performed at the time of product shipment, or may be performed using a distributed recording medium, or the programs may be downloaded via the Internet.

Moreover, even if the operation flows in the claims, specification, and drawings are explained using the words representing sequence, such as "firstly" and "next" for convenience of description, this does not mean that implementation in this sequence is indispensable, unless otherwise stated.

The present invention is not limited to the above-described embodiments, as is, and the component may be modified in actual implementation without departing from the scope of the present invention. Moreover, various inventions may be made with an appropriate combination of a plurality of components disclosed in the above-described embodiments. For example, some of all the components illustrated in the embodiments may be omitted. Furthermore, the components across the different embodiments may be combined, as needed.

### REFERENCE SIGNS LIST

101... imaging lens
103... focus drive circuit
105... aperture
107... aperture drive circuit
110... imaging circuit
111... image sensor
113... amplifier section
115... A/D conversion section
117... mixing circuit
119... I/F section
120... imaging processing circuit
121... I/F section
123... AF detection circuit
125... AE/WB circuit
127... resizing circuit
130... bus
140... CPU
141... operating member
143... flash ROM
145... DRAM
150... image processing circuit
151... OB/WB circuit
153... synchronization circuit
155... CMX
157.., gamma conversion circuit
159... RGB2YC circuit
161... edge enhancement circuit
163... NR circuit
165... resizing circuit
167... image compression/expansion circuit
170... histogram generation section
181... EVF
183... back panel
185... external memory

## Claims

1. An imaging device comprising:
imaging means for imaging a subject under a predetermined imaging condition and outputting imaging data;
displaying means capable of enhancing display-luminance of image data more than a predetermined reference luminance;
image processing means for generating the image data to be displayed on the displaying means from the imaging data; and
controlling means for controlling the imaging condition in the imaging means and an enhancement amount of display-luminance in the displaying means, wherein
the controlling means controls the imaging means so as to image the subject with gradation on a high-luminance side expanded relative to a previously prepared gradation characteristic serving as a reference, and controls, in displaying the image data generated by the image processing means on the displaying means, the enhancement amount of display-luminance of the displaying means based on an expansion amount of gradation on the high-luminance side of the imaging means.

2. The imaging device according to claim 1, wherein the image processing means performs gradation conversion on the imaging data output from the imaging means, based on the expansion amount of gradation on the high-luminance side of the imaging means and an input-output characteristic of the displaying means making the display-luminance brighter, to generate the image data to be displayed on the displaying means.

3. The imaging device according to claim 1 or 2, further comprising luminance-distribution measuring means for measuring a luminance distribution of a subject field, wherein the controlling means determines an expansion amount of gradation on the high-luminance side of the imaging means based on the measured luminance distribution.

4. The imaging device according to claim 3,
wherein the imaging means is capable of changing an imaging condition for each of a plurality of areas, and the displaying means is capable of enhancing display-luminance for each display area which is provided so as to correspond to each area of the imaging data output from the imaging means,
wherein the luminance-distribution measuring means is capable of measuring a luminance distribution of a subject field corresponding to each area of the imaging means, and
wherein the controlling means determines a gradation expansion amount on a high-luminance side for each area of the imaging means, based on the luminance distribution measured for the each area, and controls an enhancement amount of display-luminance for each area of the displaying means, based on the gradation expansion amount on a high-luminance side for each area of the imaging means.

5. An image display device which displays an image based on an image file including image data generated by imaging a subject under a predetermined imaging condition and display-luminance expansion information, the image display device comprising:
displaying means capable of enhancing display-luminance more than a predetermined reference luminance; and
controlling means for changing the display-luminance in the displaying means in performing high-luminance expansion based on the display-luminance expansion information.

6. An imaging method in an imaging device including displaying means capable of enhancing display-luminance of image data more than a predetermined reference luminance, the imaging method comprising:
an imaging step of imaging a subject under a predetermined imaging condition and outputting imaging data;
an image processing step of generating the image data to be displayed on the displaying means from the imaging data; and
a controlling step of controlling the imaging condition in the imaging step and an enhancement amount of display-luminance in the displaying means, wherein
the controlling step controls the imaging step so as to image the subject with gradation on a high-luminance side expanded relative to a previously prepared gradation characteristic serving as a reference, and controls, in displaying the image data generated in the image processing step on the displaying means, an enhancement amount of display-luminance of the displaying means based on the expansion amount of gradation on a high-luminance side in the imaging step.
